# EUROPEAN PATENT SPECIFICATION

(11) **EP 3 307 512 B1**
(45) Date of publication and mention of the grant of the patent: **24.11.2021**
(21) Application number: 16739560.7
(22) Date of filing: 08.06.2016
(51) Int. Cl.: B29C 48/92, B29C 48/07, B29C 48/16, B29C 48/18, B29D 30/52, G01N 25/72

(54) **METHOD AND APPARATUS FOR CONTROLLING THE EXTRUSION OF A SEMIFINISHED PRODUCT IN A TYRE BUILDING PROCESS**
VERFAHREN UND VORRICHTUNG ZUR STEUERUNG DER EXTRUSION EINES HALBFERTIGERZEUGNISSES IN EINEM REIFENBAUVERFAHREN
PROCÉDÉ ET APPAREIL PERMETTANT DE COMMANDER L'EXTRUSION D'UN PRODUIT SEMI-FINI LORS D'UN PROCESSUS DE CONFECTION DE PNEU

(30) Priority: 12.06.2015 IT UB20151231
(43) Date of publication of application: 18.04.2018
(73) Proprietor: Pirelli Tyre S.p.A., 20126 Milano (IT)
(72) Inventor: PECE, Gabriele, 20126 Milan (IT); SIMONATO, Giovanni, 20126 Milano (IT); FERRERO, Renato, 10129 Torino (IT); MONTRUCCHIO, Bartolomeo, 10129 Torino (IT)
(74) Representative: Baroni, Matteo
(86) International application number: PCT/IB2016/053366
(87) International publication number: WO 2016/199037

(56) References cited:
- WO-A2-2011/159280
- DE-C1- 3 315 184
- GB-A- 2 296 335
- KR-A- 20100 056 776
- US-A- 4 097 566
- US-A- 5 128 077
- US-B2- 9 029 779

## Description

The present invention relates to a method for controlling the extrusion of a semifinished product in a tyre building process.

The present invention further relates to an apparatus for controlling the extrusion of a semifinished product in a tyre building process.

A tyre for vehicle wheels generally comprises a carcass structure including at least one carcass ply having respectively opposite ends flaps in engagement with respective annular anchoring structures, generally referred to as "bead cores", integrated into the regions usually identified as "beads", the inside diameter of which substantially matches a so-called "fitting diameter" of the tyre for fitting it onto a respective rim. The tyre also comprises a crown structure including a belt structure having at least one belt strip located in a radially external position relative to the carcass ply(ies), and a tread band which is radially external to the belt strip(s). Between the tread band and the belt strip(s) a so-called "underlayer" of elastomeric material may be interposed, the properties of which are suitable for ensuring a stable union between the belt strip(s) and the tread band. In addition, respective sidewalls of elastomeric material are applied to the side surfaces of the carcass structure, each extending from one of the side edges of the tread band almost up to the respective annular bead anchoring structure. In tyres of the "tubeless" type, the carcass ply is internally coated with a layer of elastomeric material, preferably a butyl-based one, commonly referred to as "liner", which has optimal air tightness properties and extends from one bead to the other.

The term "flat shape" refers to a shape that, in a cross-sectional view, has a height that is shorter than 1/3 of its width.

The "top" and "bottom" surfaces of a semifinished product are the surfaces substantially parallel to the ground, respectively those farthest and closest to the ground, on which the extruder works while extruding the semifinished product.

The tread band is made by extrusion of a semifinished product in the form of a continuous strip, which is then cut into sections having a predetermined length, each one of which can subsequently be associated with the other components of the tyre in the course of a building step of the production process, during which all semifinished products making up the tyre are assembled together at ambient temperature.

For example, the tread band section is applied onto the belt structure previously built on an auxiliary drum, so that, during the step of assembling the tread band with the carcass structure waiting on a different forming drum, the opposite side edges of the tread band will join the radially external and axially internal end flaps of the sidewalls of the tyre. According to design choices, such end flaps are applied onto the carcass plies in such a way as to be enclosed between the latter and the opposite side edges of the tread band, or they may be directly superimposed on the opposite side edges of the tread band.

Typically, the tread band is associated with a conductive insert, the task of which is to discharge to earth the static electricity accumulated by the vehicle on which the tyre has been installed; the conductive insert is particularly necessary in tyres with a compound having a high silica content and a low "carbon black" content.

EP0868911A1 describes an extrusion method and apparatus for making tread bands for tyres of vehicles, wherein the conductive insert can be generated while co-extruding one of the tread band layers.

GB2296335A describes a method for verifying the structural integrity of a tyre. Such method comprises: heating the surface of the tyre region to be examined, by applying an external low-intensity energy source having a harmonically modulated intensity; displaying the heated area by means of a thermal camera in order to detect thermal infrared radiations emitted from the surface; comparing the emitted thermal radiation with the low-intensity energy applied in order to display a thermal image of the tyre surface; determining any discontinuities in the thermal image thus obtained, so as to detect any lack of material or other defects in the structure.

WO2011/159280A2 describes a tyre surface anomaly detection system and method. The technique described in WO2011/159280A2 applies thermal energy to the surface of a tyre and monitors the infrared energy at the surface of the tyre to generate one or more infrared images representative of the surface of the tyre. The infrared images are processed by an image processing system to determine and locate thermal gradients on the surface of the tyre. According to WO2011/159280A2, the presence of a thermal gradient in the infrared image generally indicates the presence of an anomaly in the surface of the tyre.

Document US 4,097,566 discloses: an extrusion line for producing rubber tire tread; method and apparatus for continuously controlling extrusion line operation to maintain a predetermined length and weight for the finished product; sensors for unit weight, extruder speed and swell, extruder load, extrudate temperature at the extruder and at the skiver, and conveyor speeds, signal conditioning circuits, and controls for take away conveyor speed, extruder speed, unit weight and skiver length.

Document KR20100056776 discloses a heating apparatus for extruded products as a semifinished tire that heats an extruded product which is extruded through an extruder, through a heating part. The heating unit comprises a high-temperature gas sprayer and a radiation pyrometer. The high temperature gas ejector sprays hot gas to maintain the surface temperature of the extruded product with the gas of the high temperature. The radiation pyrometer measures the surface temperature of the extruded product.

Document US5128077 discloses a method of producing a multicomponent extrudate in which the operating line automatically and accurately extrudes the extrudate materials necessary to obtain the desired contribution of materials and specified dimensions of the multicomponent extrudate profile. The screw speed of each extruder can be adjusted to the desired speed by determining the actual thickness and width dimensions of the multicomponent extrudate. The actual measurements are then fed to a computer which calculates the corresponding values of the ratios of the extruder screw speeds to line speed. Using the specified dimensions desired in the extrudate, the corresponding values for the screw and line speeds are also calculated. A comparison of the speeds based on measured dimensions, with the speeds based on specified dimensions, provides a measurement by which the screw speeds may then be adjusted such that the measurements of the extrudate profile are brought closer to the specified dimensions of the multicomponent extrudate profile.

Document US2013099123 discloses a tire surface anomaly detection system and method. The system and method are generally based on the principle that a tire surface anomaly will have a different heat transfer rate than that of the uniform mass surrounding the tire surface anomaly. Embodiments of the present disclosure apply thermal energy to the surface of a tire and monitor the infrared energy at the surface of the tire to generate one or more infrared images of the surface of the tire. The infrared images are analyzed by an image processing system to determine and locate thermal gradients on the surface of the tire. The presence of a thermal gradient in the infrared images generally indicates the presence of an anomaly in the surface of the tire.

Document DE3315184 discloses a method of monitoring the production of extruded composite profiles by an extrusion head fed by a plurality of worm extruders in which, immediately after the profile has been extruded, it is monitored by pneumatic or ultrasonic spacing measurement devices which determine the spacing between the devices and the profile. The measured spacing is then transmitted to a regulator or governor and compared with a pre-selected value. The governor or regulator controls the worm speed of the individual extruders and, if the measured value differs from the pre-selected value, alters the worm speed of one or more of the individual extruders until the measured value is the same as the pre-selected value.

The Applicant has noticed that the process described in EP0868911A1 includes no checks for the integrity of the tyre or its components.

The Applicant has also observed that the checks described in GB2296335A and WO2011/159280A2 are carried out on the tyre essentially at the end of the production process, i.e. when the tyre has already been fully assembled.

The Applicant has verified that, while making the conductive insert, problems may arise in the semifinished product due to the conductive insert not emerging at the top surface, e.g. caused by interference between co-extrusion flows. In such cases, the insert will remain buried in the other compounds without reaching the top surface, thus not giving the finished product the required conductivity properties. The checks described in GB2296335A and WO2011/159280A2 cannot detect such defects during the production of the semifinished product, since they will only signal the presence of problems in a finished tyre.

The Applicant has further verified that, also in the case wherein the conductive insert is extruded by means of a dedicated extrusion screw and is then arranged in a central position of the tread band so as to cross the latter from the bottom surface to the top surface, the checks described in GB2296335A and WO2011/159280A2 will show the same limitations.

In fact, the Applicant has observed that, with reference to this second technique for making the conductive insert, the emersion problems and the resulting low conductivity performance may arise both at the bottom or radially internal surface of the tread band and at the top or radially external surface of the same. The control techniques described in GB2296335A and WO2011/159280A2 will allow any action to be taken only at the end of the complete tyre production process.

In this context, the Applicant has noticed that the conductive insert is made of a different material than the other components of the tread band. The Applicant has also noticed that this difference may have significant consequences on the thermal behaviour of the conductive insert and of the remaining structure of the semifinished product.

More in general, the Applicant has noticed that, at the exit of an apparatus that provides a semifinished product, the materials used in the semifinished product have a higher temperature than ambient temperature, and that the differences in the thermal behaviours of the different materials are, to a certain extent, more apparent.

The Applicant has thus perceived that such differences can be advantageously used in order to verify the presence of specific components and/or the correct arrangement of some components relative to other ones.

The Applicant has then found that, by appropriately detecting radiations representative of the heat released by the semifinished product, it is possible to determine if a given component (e.g. the conductive insert) is present and has been arranged as required.

In accordance with a first aspect, the invention relates to a method for controlling the extrusion of a semifinished product in a tyre building process in accordance with claim 1.

The Applicant believes that it is thus possible to detect, essentially in real time, any errors and/or inaccuracies as concerns the presence and/or the arrangement of the conductive insert. By interrupting the production of the semifinished product as soon as the anomaly is detected, large quantities of material can be saved, which would otherwise be used, in the absence of a control process based on the present invention, for manufacturing a semifinished product or even a whole tyre that will then have to be discarded.

In accordance with a second aspect, the invention relates to an apparatus adapted for controlling the extrusion of a semifinished product in a tyre building process in accordance with claim 12.

The Applicant believes that this makes it possible to quickly and effectively detect any defects in the manufacturing of the semifinished product, thus avoiding the production of semifinished products and finished tyres that will then have to be discarded.

In at least one of the above aspects, the present invention may have one or more of the following preferred features.

Preferably, a first notification signal is generated as a function of said first detection parameters.

Preferably, determining said first detection parameters comprises verifying, based on said first radiations detected, if said semifinished product has at least one first portion corresponding to said first component and having a first temperature.

Preferably, determining said first detection parameters comprises verifying, based on said first radiation detected, if said semifinished product has at least one second portion corresponding to said second component and having a second temperature.

Preferably, determining said first detection parameters comprises verifying if a difference between said first temperature and said second temperature is greater than a first threshold. Preferably, determining said first detection parameters comprises generating a first operating parameter representative of the verification carried out in the previous step.

Preferably, said first detection parameters comprise said first operating parameter.

The Applicant believes that it will thus be possible to quickly and effectively verify at least the presence of the second component of said semifinished product.

Preferably, determining said first detection parameters comprises verifying if said second portion is in a predefined position relative to said first portion.

Preferably, determining said first detection parameters comprises generating a corresponding first verification parameter.

Preferably, said first detection parameters comprise said first verification parameter. Preferably, determining said first detection parameters comprises verifying if at least one of said first portion and said second portion has predefined dimensions.

Preferably, determining said first detection parameters comprises generating a corresponding second verification parameter.

Preferably, said first detection parameters comprise said second verification parameter. Preferably, said first verification comprises at least one first sub-step which is carried out during said extrusion.

The Applicant believes that this will allow conducting an analysis substantially in real time, so as to obtain a substantially immediate assessment of the quality of the semifinished product just made.

Preferably, said first verification comprises a second sub-step which is carried out after said extrusion has been completed.

Preferably, said second sub-step is carried out substantially on the basis of all the first radiations detected during said extrusion.

The Applicant believes that more articulated analyses can thus be made, e.g. based on all the data collected during the production of the semifinished product.

Preferably, first images are generated by detecting said first electromagnetic radiations. Preferably, each one of said first images is generated by detecting electromagnetic radiations substantially within the same time interval.

Preferably said first verification comprises associating a respective first identification code with each first image.

Preferably, said first notification signal is generated for each first image.

Preferably, for each first image the first identification code associated with said first image and a first datum representative of the respective first notification signal are stored.

The Applicant believes that this will allow tracking the quality of each portion of the semifinished product in a more accurate and efficient manner.

Preferably, said semifinished product has a flat shape, which is delimited by a top surface, a bottom surface, and at least two side surfaces.

Preferably said first electromagnetic radiations are substantially emitted from said top surface.

Preferably, second electromagnetic radiations, representative of a heat emission from said semifinished product while said semifinished product is releasing said accumulated heat, are substantially emitted from said bottom surface.

Preferably, a second verification is carried out.

Preferably, said second verification is carried out in order to verify the presence of said second component.

Preferably, said second verification is carried out in order to verify the arrangement of said second component relative to said first component.

Preferably, said second verification comprises detecting said second electromagnetic radiations.

Preferably, said second verification comprises determining, based on said second radiations detected, second detection parameters.

Preferably, said second detection parameters are representative of the presence of said second component.

Preferably, said second detection parameters are representative of the arrangement of said second component relative to said first component.

Preferably, said second verification comprises generating a second notification signal as a function of said second detection parameters.

Preferably, determining said second detection parameters comprises verifying, based on said second radiations detected, if said semifinished product has at least one third portion corresponding to said first component and having a third temperature.

Preferably, determining said second detection parameters comprises verifying, based on said second radiations detected, if said semifinished product has at least one fourth portion corresponding to said second component and having a fourth temperature.

Preferably, determining said second detection parameters comprises verifying if a difference between said third temperature and said fourth temperature is greater than a second threshold. Preferably, determining said second detection parameters comprises generating a second operating parameter representative of the verification carried out in the previous step. Preferably, said second detection parameters comprise said second operating parameter.

The Applicant believes that this will allow conducting a complete analysis of the semifinished product, particularly as concerns the presence of the second component. The Applicant believes that this analysis can be particularly advantageous in processes wherein the second component is extruded by means of a dedicated extrusion screw, so that emersion problems may occur at both surfaces of the semifinished product.

Preferably, determining said second detection parameters comprises verifying if said fourth portion is in a predefined position relative to said third portion.

Preferably, determining said second detection parameters comprises generating a corresponding third verification parameter.

Preferably, said second detection parameters comprise said third verification parameter. Preferably, determining said second detection parameters comprises verifying if at least one of said third portion and said fourth portion has predefined dimensions.

Preferably, determining said second detection parameters comprises generating a corresponding fourth verification parameter.

Preferably, said second detection parameters comprise said fourth verification parameter. Preferably, said second verification comprises at least one first sub-step which is carried out during said extrusion.

Preferably, said second verification comprises a second sub-step which is carried out after said extrusion has been completed.

Preferably, said second sub-step is carried out substantially on the basis of all the second radiations received during said extrusion.

Preferably, second images are generated by detecting said second electromagnetic radiations. Preferably, each one of said second images is generated by detecting electromagnetic radiations substantially within the same time interval.

Preferably said second verification comprises associating a respective second identification code with each second image.

Preferably, said second notification signal is generated for each second image.

Preferably, for each second image, the second identification code associated with said second image and a second datum representative of the respective second notification signal are stored.

Preferably, said semifinished product, when cut to size, forms a plurality of tread bands. Preferably, said second component is a conductive insert associated with a tread band. Preferably, said processing unit is configured for generating a first notification signal as a function of said first detection parameters.

Preferably, an encoder is used for associating a respective first identification code with each one of said first groups.

Preferably, said first detection device is configured for substantially detecting the first electromagnetic radiations emitted from said top surface.

Preferably, said first detection device substantially faces towards said top surface.

Preferably, said apparatus comprises a second detection device configured for detecting second electromagnetic radiations representative of a heat emission from said semifinished product while said semifinished product is releasing said accumulated heat, substantially emitted from said bottom surface.

Preferably, said second detection device substantially faces towards said bottom surface. Preferably, said apparatus is configured for carrying out a second verification.

Preferably, said second verification is carried out in order to verify the presence of said second component.

Preferably, said second verification is carried out in order to verify the arrangement of said second component relative to said first component.

Preferably, said processing unit is associated with said second detection device.

Preferably, said processing unit is configured for determining, based on said second radiations detected, second detection parameters.

Preferably, said second detection parameters are representative of the presence of said second component.

Preferably, said second detection parameters are representative of the arrangement of said second component relative to said first component.

Preferably, said processing unit is configured for generating a second notification signal as a function of said second detection parameters.

Preferably, said encoder is configured for associating a respective second identification code with each one of second groups.

Preferably, said second detection device substantially faces towards said bottom surface.

Further features and advantages will become more apparent in the light of the following detailed description of a preferred but non-limiting embodiment of the invention. Reference will be made in the following description to the annexed drawings, which are also provided by way of illustrative and non-limiting example, wherein:
- Figure 1 schematically shows a part of an apparatus in accordance with the present invention;
- Figure 2 shows a schematic cross-sectional view of a first embodiment of a semifinished product whereon the method according to the present invention can be carried out;
- Figure 3 shows a schematic cross-sectional view of a second embodiment of a semifinished product whereon the method according to the present invention can be carried out;
- Figure 4 shows a block diagram representing an apparatus in accordance with the present invention;
- Figures 5-6 schematically show images used in the method and apparatus according to the present invention;
- Figures 5a-6a schematically show further images used in the method and apparatus according to the present invention.

With reference to the annexed drawings, reference numeral 1 designates as a whole a semifinished product suitable for use in a tyre building process.

The semifinished product 1 comprises at least a first component 11 and a second component 12. The first component 11 is made of a first material, whereas the second component 12 is made of a second material, different from said first material.

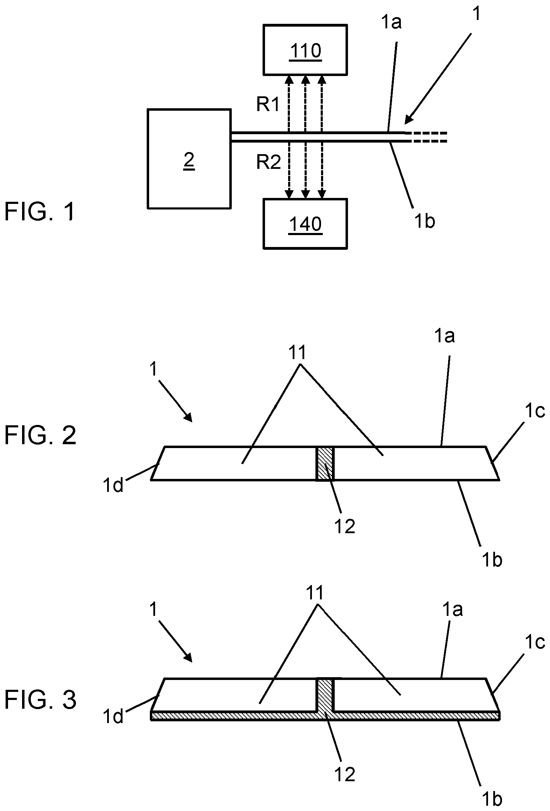

Preferably, the semifinished product 1 has a flat shape, which is delimited by a top surface 1a, a bottom surface 1b and at least two side surfaces 1c, 1d (Figures 2, 3).

By way of example, the semifinished product 1 can be used for making tread bands for tyres. More in detail, the semifinished product 1, when cut to size, can form a plurality of tread bands.

By way of example, the second component 12 is a conductive insert associated with a tread band. The first component 11 may thus form the remaining part of the tread band structure, made of elastomeric material.

The following description of the semifinished product 1 is of course applicable to any semifinished product (comprising at least a first component and a second component) to be used for building any structural component of a tyre, without being limited to tread bands. The semifinished product 1 is provided at the exit of an extrusion assembly 2.

In one embodiment, the first component 11 and the second component 12 are extruded by means of separate extrusion screws, and are then associated with each other as schematically shown in Figure 2. In this case, the second component 12 extends essentially only through the first component 11, emerging through the top surface 1a and the bottom surface 1b.

In another embodiment, the first component 11 and the second component 12 are coextruded, thus forming the semifinished product schematically shown in Figure 3. In this case, the second component 12 extends along the bottom surface 1b of the semifinished product and through the first component 11 in a substantially central position, emerging through the top surface 1a of the same semifinished product.

Note that the extrusion assembly 2 comprises the whole *per se* known structure necessary for producing the semifinished product 1.

During the extrusion process carried out in the extrusion assembly 2, the semifinished product 1 accumulates heat.

As will become more apparent in the following, at the end of the extrusion process it is possible, thanks to the radiations detected as said heat is released, to analyze the integrity of the semifinished product 1.

In particular, at least a first verification is carried out.

The purpose of the first verification is to verify the presence of the second component 12.

In other words, it is verified if the second component 12 is present and emerges correctly through the surface of the semifinished product 1.

In addition or as an alternative, the first verification aims at verifying the arrangement of the second component 12 relative to the first component 11.

It is thus verified, for example, if the second component 12 has been correctly arranged along a median longitudinal axis of the semifinished product 1.

More in detail, the first verification comprises detecting first electromagnetic radiations R1. The first radiations R1 are essentially due to the emission, from the semifinished product 1, of the heat accumulated during the extrusion process.

Preferably, the first radiations R1 are radiations emitted essentially from the top surface 1a of the semifinished product 1.

Preferably, the first radiations R1 are infrared radiations.

Preferably, the detection of said first radiations R1 will subsequently generate first images G1, G2, ..., Gn.

Preferably, each one of said first images G1, G2, ..., is generated by detecting radiations substantially within the same time interval.

More specifically, each one of said first images G1, G2, ..., Gn represents a thermographic image taken at a given time instant.

In other words, as will be further described below, the first radiations R1 can be detected by a thermal camera (first detection device 110). Each first image G1, G2, ..., Gn is generated by detecting radiations that allow the generation of a thermographic image.

Preferably, the first radiations R1 are acquired at a frequency comprised between 10 Hz and 150 Hz.

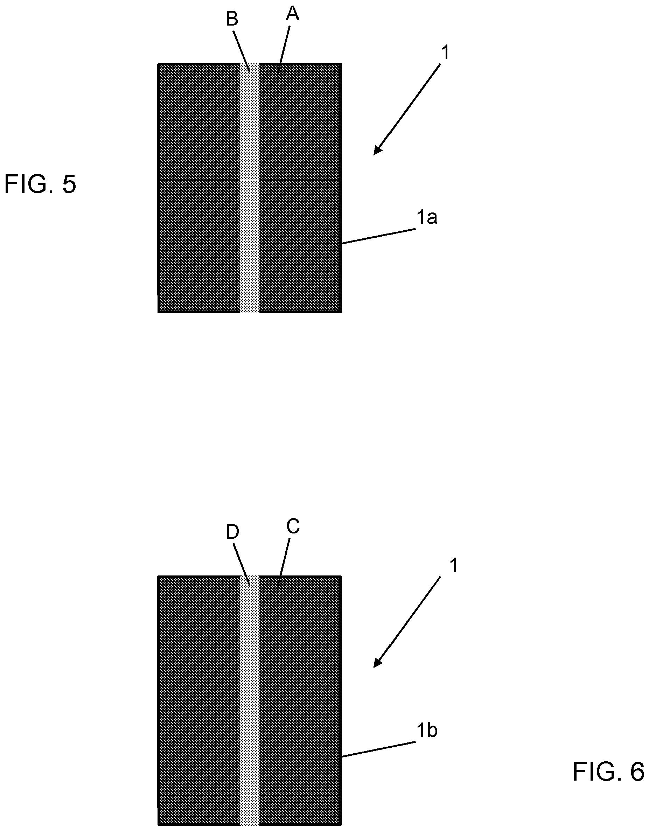

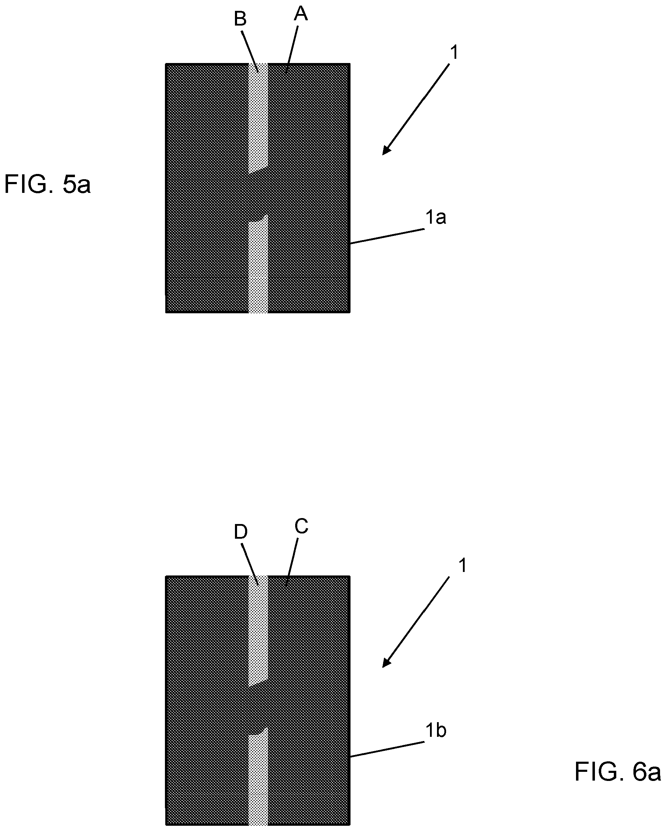

By way of example, Figures 5 and 5a schematically show a thermographic image corresponding to one of the first images G1, G2, ..., Gn.

In accordance with the invention, first detection parameters DP1 are determined on the basis of the first radiations R1.

Preferably, the first detection parameters DP1 are representative of the presence of the second component 12.

In addition or as an alternative, the first detection parameters DP1 are representative of the arrangement of the second component 12 relative to the first component 11.

More in detail, it is verified, based on the first radiations R1, if the semifinished product 1 comprises at least one first portion A, having a first temperature T1, and one second portion B, having a second temperature T2. It is then verified if a difference between the first temperature T1 and the second temperature T2 exceeds a predefined first threshold TH1; depending on this latter verification, a first operating parameter OP1 is then generated.

In practice, the first portion A may correspond to the first component 11, and the second portion B may correspond to the second component 12: if a certain temperature difference is verified, it means that there are two different materials that are cooling down according to different dynamics. Such different materials may thus correspond to the materials used for making the first and second components 11, 12.

The first operating parameter OP1 may thus be representative of the outcome of this analysis: if the presence of the second portion B, i.e. the second component 12, is ascertained, then the first operating parameter OP1 will have a certain value; if, on the contrary, the second portion B, i.e. the second component 12, is not detected, then the first operating parameter OP1 will have a value that will be different from said predefined value.

Note that the analysis represented by the first operating parameter OP1 aims at verifying if the second component 12 emerges correctly from the surface of the semifinished product 1: the "presence" of the second portion B should therefore be understood as "presence on the outer surface of the semifinished product 1". As a matter of fact, the second component 12 might actually be present within the semifinished product 1 without however emerging through the surface thereof, in which case it will not be detected correctly.

Figure 5 schematically shows the first portion A and the second portion B, identified in a thermographic image G1, G2, ...Gn obtained on the basis of the detection of the first radiations R1, wherein the second component 12 has been detected correctly.

On the contrary, Figure 5a shows, in a similar fashion, the first portion A and the second portion B, identified in a thermographic image G1, G2, ...Gn obtained on the basis of the detection of the first radiations R1, wherein the second component 12 has not been detected correctly, since it does not properly emerge on the outer surface of the semifinished product 1 (e.g. the top surface 1a).

The Applicant wishes to point out that the difference between the first and second temperatures T1, T2, when the second component 12 is a conductive insert, may be comprised between about 4°C and 6 °C; the Applicant also wishes to remark that such values are much greater than the tolerance thresholds of commercially available thermal cameras, and therefore such temperature difference can be sensed with a high degree of reliability.

The applicant also wishes to point out that the position of the thermal camera can be selected essentially at will, due to the features of the commercial thermal cameras currently available on the market. More specifically, the thermal camera can be positioned at a variable height from the top/bottom surface of the semifinished product 1 of, for example, approximately 30 cm to 2.5 m (this range being the one most commonly used, essentially depending on the technical specifications of the thermal cameras and optics currently available), either near the extrusion assembly 2 or a few metres away from it, provided that the semifinished product 1 has not yet begun undergoing the liquid cooling process (generally using water). For example, during the air cooling that starts at the extrusion outlet, the first component 11 and the second component 12 will cool down according to sufficiently different dynamics so as to be still detectable, as previously illustrated, without much difficulty by modern thermal cameras.

Based on the first radiations R1, it is also possible to verify if the second portion B is in a predefined position relative to the first portion A. In particular, after the first and second portions A, B have been identified, it is determined if the mutual positions of the same correspond to a predetermined arrangement. For example, it is verified if the second portion B is arranged along a median longitudinal axis of the semifinished product 1. As a function of this verification, a first verification parameter VP1 is then generated, the values of which will depend on whether the second portion B is correctly arranged relative to the first portion A or not.

A further verification that can be carried out on the basis of the first radiations R1 concerns the dimensions of the first portion A and/or the dimensions of the second portion B: preferably, once the first and second portions A, B have been identified, their dimensions are determined; such dimensions are then compared with pre-stored data, and a second verification parameter VP2 is generated as a function of such comparison.

In practice, the second verification parameter VP2 will take preset values representative of the fact that the first portion and/or the second portion A, B have the desired dimensions. Based on said first radiations R1, first detection parameters DP1 are generated.

The first detection parameters DP1 comprise one or more of the above-mentioned first operating parameter OP1, first verification parameter VP1, second verification parameter VP2.

Preferably, the first detection parameters DP1 comprise the first operating parameter OP1, the first verification parameter VP1, and also the second verification parameter VP2.

A first notification signal NS1 is generated as a function of the first detection parameters DP1.

Advantageously, the first notification signal NS1 is representative of the admissibility or inadmissibility of the semifinished product 1, or at least a part thereof, as concerns the presence, dimensions and/or arrangement of the first and second components 11, 12.

The first notification signal NS1 may comprise, for example, a visual and/or audible signal aimed at drawing the attention of an operator in the event that the production of a semifinished product should be interrupted because of errors/defects.

In addition or as an alternative, the first notification signal NS1 may be configured for automatically stopping the extrusion of the semifinished product 1.

In addition or as an alternative, the first notification signal NS1 may simply contain the information about the quality of the semifinished product 1 in terms of presence/arrangement of its components. Such information may be stored for further processing.

As said above, the detection of the first radiations R1 originates a plurality of thermographic images G1, G2, ..., Gn.

Advantageously, a respective first identification code ID1 is associated with each first image G1, G2, ..., Gn.

Said first identification code ID1 is conveniently used for associating the thermographic image with the portion of semifinished product represented therein.

By way of example, the first identification code ID1 may be obtained through an encoder 130, the rotation of which is associated with the advance of the semifinished product 1 as it exits the extrusion assembly 2. The first identification code ID1 is thus determined in a progressive manner, so that thermographic images taken sequentially over time will be associated with portions of semifinished product 1 extruded in the same succession. Preferably, a first notification signal NS1 is generated for each first image G1, G2, ..., Gn. In this manner, the outcome of the analysis carried out on each thermographic image will be made available.

Advantageously, a storing step is carried out, during which the following is stored for each first image G1, G2, ..., Gn:
- the first identification code ID1, and
- a first datum D1, representative of the respective first notification signal NS1.

It will thus be possible to go back to errors or defects even after the end of the extrusion process, e.g. when the semifinished product 1 has been wound into coils or cut to size for storage.

Preferably, the analysis of the semifinished product 1 comprises a first sub-step, wherein the first notification signal NS1 is generated during the extrusion process. It will thus be possible to detect substantially in real time any problems related to the presence and/or arrangement of the components of the semifinished product, so that the extrusion process can be interrupted, if necessary, to avoid producing other semifinished products that will then have to be discarded.

Preferably, the analysis of the semifinished product 1 comprises a second sub-step, carried out after the extrusion is complete: this second analysis (also called "batch" or "offline" analysis) can advantageously take into consideration all of the thermographic images taken during the extrusion process, so that more in-depth and complex (statistic) verifications can be made, compared to those carried out in real time while the semifinished product 1 is being extruded.

By way of example, in the second sub-step the images acquired during the extrusion process are used for reconstructing via software a total image of the semifinished product manufactured. More specifically, an image of every single production batch is reconstructed from start to end, without any time and/or size limitations. In this reconstructed image, the second component 12 is checked from production start to production end. In particular, continuity and temperature variations are analyzed throughout the production process. The image thus analyzed allows validating the whole production batch, and can be saved into the production data collection system along with the analysis just made.

As aforementioned, the first radiations R1 are preferably radiations emitted essentially from the top surface 1a of the semifinished product 1.

In one embodiment of the invention, e.g. applicable to the case wherein the semifinished product 1 has the structure schematically shown in Figure 3, the analysis based only on the first radiations R1 may be sufficient to evaluate the structural correctness of the semifinished product 1.

In a different embodiment, e.g. applicable to the case wherein the semifinished product 1 has the structure schematically shown in Figure 2, a second verification may be carried out, which is based on radiations emitted from the bottom surface 1b of the semifinished product 1, in a manner wholly similar to the above-described first verification.

The second verification aims at verifying at least one of:
presence of the second component 12; and
arrangement of the second component 12 relative to the first component 11.

The second verification preferably comprises detecting second radiations R2, substantially emitted from the bottom surface 1b of the semifinished product 1.

Such second radiations R2 are emitted while the semifinished product 1 is releasing the heat accumulated during the extrusion carried out in the extrusion assembly 2.

Preferably, the second radiations R2 are infrared radiations.

Preferably, the detection of said second radiations R2 will subsequently generate second images HI, H2, ..., Hn.

Preferably, each one of said second images HI, H2, ..., Hn is generated by detecting radiations substantially within the same time interval.

Preferably, the second radiations R2 are acquired at a frequency comprised between 10 Hz and 150 Hz.

By way of example, Figures 6 and 6a schematically show a thermographic image corresponding to one of the second images HI, H2, ..., Hn.

In other words, as will be further described below, the second radiations R2 can be detected by a thermal camera (second detection device 140). Each second image HI, H2, ..., Hn is generated by detecting radiations that allow the generation of a thermographic image.

Based on the second radiations R2, second detection parameters DP2 are generated, which are representative of the presence of the second component 12 and/or of the arrangement of the second component 12 relative to the first component 11.

More in detail, on the basis of the second radiations R2 it is verified if the semifinished product 1 includes at least one third portion C having a third temperature T3 and one fourth portion D having a fourth temperature T4. It is then verified if a difference between the third temperature T3 and the fourth temperature T4 is greater than a second threshold TH2, and a corresponding second operating parameter OP2 is generated.

In practice, the third portion C may correspond to the first component 11, and the fourth portion D may correspond to the second component 12.

If the third and fourth portions C, D, having the above-defined thermal characteristics, are identified, then the second operating parameter OP2 will have a value representative of the fact that the second component 12 is present.

For example, Figure 6 schematically shows the third portion C and the fourth portion D, identified in a thermographic image HI, H2, ...Hn obtained on the basis of the detection of the second radiations R2, wherein the second component 12 has been detected correctly.

On the contrary, Figure 6a shows, in a similar fashion, the third portion C and the fourth portion D, identified in a thermographic image HI, H2, ...Hn obtained on the basis of the detection of the second radiations R2, wherein the second component 12 has not been detected correctly, since it does not fully emerge on the outer surface of the semifinished product 1 (e.g. the bottom surface 1b).

In addition or as an alternative, it is possible to verify, on the basis of the second radiations R2 detected, if the fourth portion D is in a predefined position relative to the third portion C. A corresponding third verification parameter VP3 is then generated, which is representative of the outcome of this part of the analysis.

It can also be verified, on the basis of the second radiations R2 detected, if the third portion C and/or the fourth portion D have predefined dimensions. Following this part of the analysis, a corresponding fourth verification parameter VP4 is generated.

Advantageously, the above-mentioned second detection parameters DP2 comprise one or more of the second operating parameter OP2, the third verification parameter VP3, and the fourth verification parameter VP4.

Preferably, the second detection parameters DP2 comprise the second operating parameter OP2, the third verification parameter VP3, and also the fourth verification parameter VP4.

As a function of the second detection parameters DP2, a second notification signal NS2 is generated, the meaning of which is wholly similar to that of the above-mentioned first notification signal NS1, though it refers to the bottom surface 1b of the semifinished product 1.

As aforementioned, the detection of the second radiations R2 originates a plurality of thermographic images HI, H2, ..., Hn.

Advantageously, a respective second identification code ID2 is associated with each second image HI, H2, ..., Hn.

Said second identification code ID2 is conveniently used for associating the thermographic image with the portion of semifinished product 1 represented therein.

By way of example, the second identification code ID2 can be obtained through the above-mentioned encoder 130, just like the first identification code ID1.

Preferably, a second notification signal NS2 is generated for each second image HI, H2, ..., Hn. In this manner, the outcome of the analysis carried out on each thermographic image will be made available.

Advantageously, a storing step is carried out, during which the following is stored for each second image HI, H2, ..., Hn:
- the second identification code ID2, and
- a second datum D2, representative of the respective second notification signal NS2. Preferably, the second verification comprises a first sub-step, wherein the second notification signal NS2 is generated during the extrusion process.

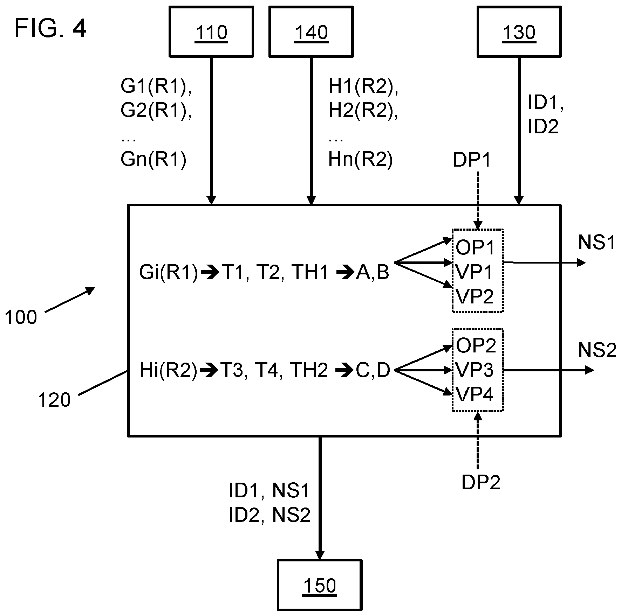

Preferably, the second verification comprises a second sub-step, carried out after the extrusion is complete: this second analysis (also called "batch" or "offline" analysis) can advantageously take into consideration all of the thermographic images taken during the extrusion process, so that more in-depth and complex (statistic) verifications can be made, compared to those carried out in real time while the semifinished product 1 is being extruded. The method according to the invention can advantageously be implemented by an apparatus 100, schematically shown in Figure 4.

The apparatus 100 comprises, first of all, at least the above-mentioned first detection device 110 for detecting the first electromagnetic radiations R1.

Preferably, the first detection device 110 substantially faces towards the top surface 1a of the semifinished product 1, and detects the first electromagnetic radiations R1 emitted from said top surface 1a.

Preferably, the apparatus 100 further comprises the second detection device 140.

Preferably, the second detection device 140 substantially faces towards the bottom surface 1b of the semifinished product 1, and detects the second radiations R2 emitted from said bottom surface 1b.

The apparatus 100 further comprises a processing unit 120 associated with the first detection device 110 and, preferably, with the second detection device 140.

The processing unit 120 is configured for determining the first detection parameters DP1 on the basis of the first radiations R1, and, preferably, the second detection parameters DP2 on the basis of the second radiations R2.

In particular, the processing unit 120 is configured for determining one or more of the following:
- the first operating parameter OP 1;
- the first verification parameter VP1;
- the second verification parameter VP2.

Preferably, the processing unit 120 is configured for determining the first operating parameter OP1, the first verification parameter VP1, and also the second verification parameter VP2.

In particular, the processing unit 120 is configured for determining one or more of the following:
- the second operating parameter OP2;
- the third verification parameter VP3;
- the fourth verification parameter VP4.

Preferably, the processing unit 120 is configured for determining the second operating parameter OP2, the third verification parameter VP3, and also the fourth verification parameter VP4.

The processing unit 120 is preferably configured for generating said first notification signal NS1 on the basis of the first detection parameters DP1.

The processing unit 120 is preferably configured for generating said second notification signal NS2 on the basis of the second detection parameters DP2.

Preferably, the apparatus 100 comprises also the encoder 130.

The encoder 130 is associated with the extrusion assembly 2, so that the rotation of the encoder 130 will be associated with the advance of the semifinished product 1 exiting the extrusion assembly 2.

Thanks to the encoder 130, it is possible to associate the respective first identification code ID1 with each first image G1, G2, ..., Gn, and, preferably, the respective second identification code ID2 with each second image HI, H2, ..., Hn.

Preferably, the apparatus 100 is associated with a storage medium 150, which may be either integrated into or connected to the apparatus 100.

The storage medium 150 can advantageously store the first identification code ID1 and the respective first datum D1 for each first image G1, G2, ..., Gn.

The storage medium 150 can advantageously store the second identification code ID2 and the respective second datum D2 for each second image HI, H2, ..., Hn.

## Claims

1. Method for controlling the extrusion of a semifinished product in a tyre building process, said method comprising:
➢ providing a semifinished product (1) at the exit of an extrusion assembly (2), said semifinished product (1) comprising at least:
a first component (11) made of at least one first material;
a second component (12) made of at least one second material, different from said first material;
said semifinished product (1) having accumulated heat during an extrusion carried out in said extrusion assembly (2);
➢ making a first verification for verifying at least one of:
presence of said second component (12);
arrangement of said second component (12) relative to said first component (11),
wherein said first verification comprises:
detecting first electromagnetic radiations (R1) representative of a heat emission from said semifinished product (1) while said semifinished product (1) is releasing said accumulated heat;
based on said first radiations (R1) detected, determining first detection parameters (DP1) representative of at least one of the presence of said second component (12) and the arrangement of said second component (12) relative to said first component (11).

2. Method according to claim 1, wherein a first notification signal (NS1) is generated as a function of said first detection parameters (DP1).

3. Method according to claim 1, wherein determining said first detection parameters (DP1)comprises:
➢ based on said first radiations (R1) detected:
verifying if said semifinished product (1) has at least one first portion (A) corresponding to said first component (11) and having a first temperature (T1);
verifying if said semifinished product (1) has at least one second portion (B) corresponding to said second component (12) and having a second temperature (T2);
➢ verifying if a difference between said first temperature (T1) and said second temperature (T2) is greater than a first threshold (TH1);
➢ generating a first operating parameter (OP1) representative of the verification carried out in the previous step;
said first detection parameters (DP1)comprising said first operating parameter (OP1).

4. Method according to claim 3, wherein determining said first detection parameters (DP1)comprises: verifying if said second portion (B) is in a predefined position relative to said first portion (A), and generating a corresponding first verification parameter (VP1), said first detection parameters (DP1)comprising said first verification parameter (VP1).

5. Method according to claim 3 or 4, wherein determining said first detection parameters (DP1)comprises:
verifying if at least one of said first portion (A) and said second portion (B) has predefined dimensions, and generating a corresponding second verification parameter (VP2),
said first detection parameters (DP1)comprising said second verification parameter (VP2).

6. Method according to any one of the preceding claims, wherein said first verification comprises at least one sub-step which is carried out during said extrusion and a second sub-step which is carried out after said extrusion has been completed.

7. Method according to any one of the preceding claims, wherein, through said detection of said first electromagnetic radiations (R1), first images (G1, G2, ..., Gn) are generated, each one of said first images (G1, G2, ..., Gn) being generated by detecting electromagnetic radiations substantially within the same time interval.

8. Method according to claim 7 when dependent on claim 2, wherein said first verification comprises associating a respective first identification code (ID1) with each first image (G1, G2, ..., Gn), wherein said first notification signal (NS1) is generated for each first image (G1, G2, ..., Gn), said method comprising storing, for each first image (G1, G2, ..., Gn), the first identification code (ID1) associated with said first image and a first datum (D1) representative of the respective first notification signal (NS1).

9. Method according to any one of the preceding claims, wherein said semifinished product (1) has a flat shape, which is delimited by a top surface (1a), a bottom surface (1b) and at least two side surfaces (1c, Id), wherein said first electromagnetic radiations (R1) are substantially emitted from said top surface (1a), wherein second electromagnetic radiations (R2), representative of a heat emission from said semifinished product (1) while said semifinished product (1) is releasing said accumulated heat, are substantially emitted from said bottom surface (1b), wherein a second verification is carried out for verifying at least one of:
presence of said second component (12);
arrangement of said second component (12) relative to said first component (11), wherein said second verification comprises:
detecting said second electromagnetic radiations (R2); based on said second radiations (R2) detected, determining second detection parameters (DP2) representative of at least one of the presence of said second component (12) and the arrangement of said second component (12) relative to said first component (11).

10. Method according to any one of the preceding claims, wherein said semifinished product (1), when cut to size, forms a plurality of tread bands.

11. Method according to claim 10, wherein said second component (12) is a conductive insert associated with a tread band.

12. Apparatus adapted for controlling the extrusion of a semifinished product in a tyre building process, wherein a semifinished product (1) at the exit of an extrusion assembly (2) comprises at least:
➢ a first component (11) made of at least one first material;
➢ a second component (12) made of at least one second material, different from said first material;
said semifinished product (1) having accumulated heat during an extrusion carried out in said extrusion assembly (2);
said apparatus (100) being adapted to carry out a first verification for verifying at least one of:
presence of said second component (12);
arrangement of said second component (12) relative to said first component (11),
said apparatus (100) comprising:
➢ at least one first detection device (110) adapted to detect first electromagnetic radiations (R1) representative of a heat emission from said semifinished product (1) while said semifinished product (1) is releasing said accumulated heat;
➢ a processing unit (120) associated with said at least one first detection device (110) and configured for:
determining, based on said first radiations (R1) detected, first detection parameters (DP1) representative of at least one of the presence of said second component (12) and the arrangement of said second component (12) relative to said first component (11).

13. Apparatus according to claim 12, wherein said processing unit (120) is configured for generating a first notification signal (NS1) as a function of said first detection parameters (DP1).

14. Apparatus according to claim 12, wherein said first electromagnetic radiations (R1) detected generate first images (G1, G2, ..., Gn), each one of said first images (G1, G2, ..., Gn) being generated by radiations which are detected substantially within the same time interval.

15. Apparatus according to any one of claims 12-14, wherein said semifinished product (1) has a flat shape, which is delimited by a top surface (1a), a bottom surface (1b)and at least two side surfaces (1c, Id), wherein said first detection device (110) is configured for detecting the first electromagnetic radiations (R1) emitted from said top surface (1a), said first detection device (110) substantially facing said top surface (1a), wherein a second detection device (140) is included, which is configured for detecting second electromagnetic radiations (R2) representative of a heat emission from said semifinished product (1) while said semifinished product (1) is releasing said accumulated heat, emitted from said bottom surface (1b), said second detection device (140) substantially facing said bottom surface (1b), wherein said apparatus (1) is configured for carrying out a second verification for verifying at least one of:
presence of said second component (12);
arrangement of said second component (12) relative to said first component (11),
wherein said processing unit (120) is associated with said second detection element (140) and is configured for:
determining, based on said second radiations (R2) detected, second detection parameters (DP2) representative of at least one of the presence of said second component (12) and the arrangement of said second component (12) relative to said first component (11).

## Patentansprüche

1. Verfahren zum Steuern der Extrusion eines halbfertigen Produkts in einem Reifenfertigungsprozess, wobei das Verfahren umfasst:
➢ Bereitstellen eines halbfertigen Produkts (1) am Austritt einer Extrusionsanordnung (2), wobei das halbfertige Produkt (1) zumindest umfasst:
eine erste Komponente (11), die aus zumindest einem ersten Material gebildet ist;
eine zweite Komponente (12, die aus zumindest einem zweiten Material hergestellt ist, das sich von dem ersten Material unterscheidet;
wobei das halbfertige Produkt (1) während einer Extrusion, die in der Extrusionsanordnung (2) erfolgt ist, Wärme akkumuliert hat;
➢ Durchführen einer ersten Verifikation, um zumindest eines aus Folgendem zu verifizieren:
das Vorliegen der zweiten Komponente (12);
die Anordnung der zweiten Komponente (12) relativ zu der ersten Komponente (11),
wobei die erste Verifikation umfasst:
Erfassen von ersten elektromagnetischen Strahlungen (R1), die eine Wärmeabstrahlung von dem halbfertigen Produkt (1) darstellen, während das halbfertige Produkt (1) die akkumulierte Wärme freisetzt;
Bestimmen von ersten Erfassungsparametern (DP1), welche zumindest eines aus dem Vorliegen der zweiten Komponente (12) und der Anordnung der zweiten Komponente (12) relativ zu der ersten Komponente (11) darstellen, auf Grundlage der erfassten ersten Strahlungen (R1).

2. Verfahren nach Anspruch 1, wobei ein erstes Benachrichtigungssignal (NS1) als eine Funktion der ersten Erfassungsparameter (DP1) erzeugt wird.

3. Verfahren nach Anspruch 1, wobei das Bestimmen der ersten Erfassungsparameter (DP1) umfasst:
➢ auf Grundlage der ersten erfassten Strahlungen (R1):
Verifizieren, ob das halbfertige Produkt (1) zumindest einen ersten Abschnitt (A) aufweist, welcher der ersten Komponente (11) entspricht und eine erste Temperatur (T1) aufweist;
Verifizieren, ob das halbfertige Produkt (1) zumindest einen ersten Abschnitt (B) aufweist, welcher der zweiten Komponente (12) entspricht und eine zweite Temperatur (T2) aufweist;
➢ Verifizieren, ob eine Differenz zwischen der ersten Temperatur (T1) und der zweiten Temperatur (T2) größer ist als eine Schwelle (TH1);
➢ Erzeugen eines ersten Betriebsparameters (OP1), welcher die Verifizierung darstellt, die in dem vorhergehenden Schritt durchgeführt wurde;
wobei die ersten Erfassungsparameter (DP1) den ersten Betriebsparameter (OP1) umfassen.

4. Verfahren nach Anspruch 3, wobei das Bestimmen der ersten Erfassungsparameter (DP1) umfasst: Verifizieren, ob der zweite Abschnitt (B) in einer vordefinierten Position relativ zu dem ersten Abschnitt (A) ist, und Erzeugen eines entsprechenden Verifizierungsparameters (VP1), wobei die ersten Erfassungsparameter (DP1) den ersten Verifizierungsparameter (VP1) umfassen.

5. Verfahren nach Anspruch 3 oder 4, wobei das Bestimmen der ersten Erfassungsparameter (DP1) umfasst:
Verifizieren, ob zumindest einer von dem ersten Abschnitt (A) und dem zweiten Abschnitt (B) vordefinierte Dimensionen aufweist, und Erzeugen eines entsprechenden zweiten Verifizierungsparameters (VP2),
wobei die ersten Erfassungsparameter (DP1) den zweiten Verifizierungsparameter (VP2) umfassen.

6. Verfahren nach einem der vorhergehenden Ansprüche, wobei die erste Verifikation zumindest einen Teilschritt umfasst, der während der Extrusion ausgeführt wird, sowie einen zweiten Teilschritt, der ausgeführt wird, nachdem die Extrusion abgeschlossen ist.

7. Verfahren nach einem der vorhergehenden Ansprüche, wobei durch die Erfassung der ersten elektromagnetischen Strahlungen (R1) erste Bilder (G1, G2, ..., Gn) erzeugt werden, wobei ein jedes der ersten Bilder (G1, G2, ..., Gn) erzeugt wird, indem elektromagnetische Strahlungen im Wesentlichen innerhalb desselben Zeitintervalls erfasst werden.

8. Verfahren nach Anspruch 7, sofern abhängig von Anspruch 2, wobei die erste Verifikation umfasst: Zuordnen eines jeweiligen ersten Identifikationscodes (1D1) zu jedem ersten Bild (G1, G2, ..., Gn), wobei das erste Benachrichtigungssignal (NS1) für jedes erste Bild (G1, G2, ..., Gn) erzeugt wird, wobei das Verfahren das Speichern des ersten Identifikationscodes (1D1), das dem ersten Bild zugeordnet ist, und eines ersten Datensatzes (D1), welcher das jeweilige erste Benachrichtigungssignal (NS1) darstellt, für jedes erste Bild (G1, G2, ..., Gn) umfasst.

9. Verfahren nach einem der vorhergehenden Ansprüche, wobei das halbfertige Produkt (1) eine flache Gestalt aufweist, die von einer oberen Oberfläche (1a), einer unteren Oberfläche (1b) und zumindest zwei Seitenflächen (1c, 1d) begrenzt wird, wobei die ersten elektromagnetischen Strahlungen (R1) im Wesentlichen von der oberen Oberfläche (1a) abgegeben werden, wobei zweite elektromagnetische Strahlungen (R2), welche eine Wärmeabstrahlung von dem halbfertigen Produkt (1) darstellen, während das halbfertige Produkt (1) die akkumulierte Wärme freisetzt, im Wesentlichen von der unteren Oberfläche (1b) abgegeben werden, wobei eine zweite Verifikation durchgeführt wird, um zumindest eines aus Folgendem zu verifizieren:
das Vorliegen der zweiten Komponente (12);
die Anordnung der zweiten Komponente (12) relativ zu der ersten Komponente (11),
wobei die zweite Verifikation umfasst:
Erfassen der zweiten elektromagnetischen Strahlungen (R2);
Bestimmen von zweiten Erfassungsparametern (DP2), welche zumindest eines aus dem Vorliegen der zweiten Komponente (12) und der Anordnung der zweiten Komponente (12) relativ zu der ersten Komponente (11) darstellen, auf Grundlage der erfassten zweiten Strahlungen (R2).

10. Verfahren nach einem der vorhergehenden Ansprüche, wobei das halbfertige Produkt (1) nach dem Ablängen eine Vielzahl von Laufflächenringen bildet.

11. Verfahren nach Anspruch 10, wobei die zweite Komponente (12) ein leitfähiger Einsatz ist, der dem Laufflächenring zugeordnet ist.

12. Vorrichtung, die zur Steuerung der Extrusion eines halbfertigen Produkts in einem Reifenfertigungsprozess geeignet ist, wobei ein halbfertiges Produkt (1) am Austritt einer Extrusionsanordnung (2) zumindest umfasst:
➢ eine erste Komponente (11), die aus zumindest einem ersten Material gebildet ist;
➢ eine zweite Komponente (12, die aus zumindest einem zweiten Material hergestellt ist, das sich von dem ersten Material unterscheidet;
wobei das halbfertige Produkt (1) während einer Extrusion, die in der Extrusionsanordnung (2) erfolgt ist, Wärme akkumuliert hat;
wobei die Vorrichtung (100) dazu geeignet ist, eine erste Verifikation durchzuführen, um zumindest eines aus Folgendem zu verifizieren:
das Vorliegen der zweiten Komponente (12);
die Anordnung der zweiten Komponente (12) relativ zu der ersten Komponente (11), wobei die Vorrichtung (100) umfasst;
➢ zumindest eine erste Erfassungseinrichtung (110), die dazu geeignet ist, erste elektromagnetische Strahlungen (R1) zu erfassen, welche eine Wärmeabstrahlung von dem halbfertigen Produkt (1) darstellen, während das halbfertige Produkt (1) die akkumulierte Wärme freisetzt;
➢ eine Verarbeitungseinheit (120), die der zumindest einen ersten Erfassungseinrichtung (110) zugeordnet und dazu ausgestaltet ist:
erste Erfassungsparameter (DP1) zu bestimmen, welche zumindest eines aus dem Vorliegen der zweiten Komponente (12) und der Anordnung der zweiten Komponente (12) relativ zu der ersten Komponente (11) darstellen, auf Grundlage der erfassten ersten Strahlungen (R1).

13. Vorrichtung nach Anspruch 12, wobei die Verarbeitungseinheit (120) dazu ausgestaltet ist, ein erstes Benachrichtigungssignal (NS1) als eine Funktion der ersten Erfassungsparameter (DP1) zu erzeugen.

14. Vorrichtung nach Anspruch 12, wobei die erfassten ersten elektromagnetischen Strahlungen (R1) erste Bilder (G1, G2, ..., Gn) erzeugen, wobei jedes der ersten Bilder (G1, G2, ..., Gn) durch Strahlungen erzeugt wird, die im Wesentlichen innerhalb desselben Zeitintervalls erfasst werden.

15. Vorrichtung nach einem der vorhergehenden Ansprüche 12 bis 14, wobei das halbfertige Produkt (1) eine flache Gestalt aufweist, die von einer oberen Oberfläche (1a), einer unteren Oberfläche (1b) und zumindest zwei Seitenflächen (1c, 1d) begrenzt wird, wobei die erste Erfassungseinrichtung (110) dazu ausgestaltet ist, die ersten elektromagnetischen Strahlungen (R1) zu erfassen, die von der oberen Oberfläche (1a) abgegeben werden, wobei die erste Erfassungseinrichtung (110) im Wesentlichen der oberen Oberfläche (1a) zugewandt ist, wobei eine zweite Erfassungseinrichtung (140) beinhaltet ist, die dazu ausgestaltet ist, zweite elektromagnetische Strahlungen (R2), die eine von der unteren Oberfläche (1b) abgegebene Wärmeabstrahlung von dem halbfertige Produkt (1) darstellen, zu erfassen, während das halbfertige Produkt (1) die akkumulierte Wärme freisetzt, wobei die zweite Erfassungseinrichtung (140) im Wesentlichen der unteren Oberfläche (1b) zugewandt ist, wobei die Einrichtung (1) dazu ausgestaltet ist, eine zweite Verifikation durchzuführen, um zumindest eines aus Folgendem zu verifizieren:
das Vorliegen der zweiten Komponente (12);
die Anordnung der zweiten Komponente (12) relativ zu der ersten Komponente (11),
wobei die Verarbeitungseinheit (120) dem zweiten Erfassungselement (140) zugeordnet und dazu ausgestaltet ist:
auf Grundlage der erfassten zweiten Strahlungen (R2) zweite Erfassungsparameter (DP2) zu bestimmen, welche zumindest eines aus dem Vorliegen der zweiten Komponente (12) und der Anordnung der zweiten Komponente (12) relativ zu der ersten Komponente (11) darstellen.

## Revendications

1. Procédé de commande de l'extrusion d'un produit semi-fini dans un processus de construction de pneu, ledit procédé comprenant le fait :
➢ de fournir un produit semi-fini (1) à la sortie d'un ensemble d'extrusion (2), ledit produit semi-fini (1) comprenant au moins :
un premier composant (11) fait d'au moins un premier matériau ;
un deuxième composant (12) fait d'au moins un deuxième matériau, différent dudit premier matériau ; ledit produit semi-fini (1) ayant accumulé de la chaleur au cours d'une extrusion effectuée dans ledit ensemble d'extrusion (2) ;
➢ de réaliser une première vérification pour vérifier :
la présence dudit deuxième composant (12) ; et/ou
l'agencement dudit deuxième composant (12) par rapport audit premier composant (11),
dans lequel ladite première vérification comprend :
la détection de premiers rayonnements électromagnétiques (R1) représentant une émission de chaleur à partir dudit produit semi-fini (1) pendant que ledit produit semi-fini (1) libère ladite chaleur accumulée ;
sur la base desdits premiers rayonnements (R1) détectés, la détermination de premiers paramètres de détection (DP1) représentant la présence dudit deuxième composant (12) et/ou l'agencement dudit deuxième composant (12) par rapport audit premier composant (11).

2. Procédé selon la revendication 1, dans lequel un premier signal de notification (NS1) est généré en fonction desdits premiers paramètres de détection (DP1).

3. Procédé selon la revendication 1, dans lequel la détermination desdits premiers paramètres de détection (DP1) comprend :
➢ sur la base desdits premiers rayonnements (R1) détectés :
la vérification du fait que ledit produit semi-fini (1) a au moins une première partie (A) correspondant audit premier composant (11) et ayant une première température (T1) ;
la vérification du fait que ledit produit semi-fini (1) a au moins une deuxième partie (B) correspondant audit deuxième composant (12) et ayant une deuxième température (T2) ;
➢ la vérification du fait qu'une différence entre ladite première température (T1) et ladite deuxième température (T2) est supérieure à un premier seuil (TH1) ;
➢ la génération d'un premier paramètre de fonctionnement (OP1) représentant la vérification effectuée dans l'étape précédente ;
lesdits premiers paramètres de détection (DP1) comprenant ledit premier paramètre de fonctionnement (OP1).

4. Procédé selon la revendication 3, dans lequel la détermination desdits premiers paramètres de détection (DP1) comprend : la vérification du fait que ladite deuxième partie (B) est dans une position prédéfinie par rapport à ladite première partie (A), et la génération d'un premier paramètre de vérification correspondant (VP1), lesdits premiers paramètres de détection (DP1) comprenant ledit premier paramètre de vérification (VP1).

5. Procédé selon la revendication 3 ou 4, dans lequel la détermination desdits premiers paramètres de détection (DP1) comprend :
la vérification du fait qu'au moins l'une de ladite première partie (A) et de ladite deuxième partie (B) a des dimensions prédéfinies, et la génération d'un deuxième paramètre de vérification correspondant (VP2),
lesdits premiers paramètres de détection (DP1) comprenant ledit deuxième paramètre de vérification (VP2).

6. Procédé selon l'une quelconque des revendications précédentes, dans lequel ladite première vérification comprend au moins une sous-étape qui est effectuée au cours de ladite extrusion et une deuxième sous-étape qui est effectuée après la fin de ladite extrusion.

7. Procédé selon l'une quelconque des revendications précédentes, dans lequel, grâce à ladite détection desdits premiers rayonnements électromagnétiques (R1), des premières images (G1, G2, ..., Gn) sont générées, chacune desdites premières images (G1, G2, ..., Gn) étant générée en détectant des rayonnements électromagnétiques sensiblement dans le même intervalle de temps.

8. Procédé selon la revendication 7 lorsqu'elle dépend de la revendication 2, dans lequel ladite première vérification comprend l'association d'un premier code d'identification (ID1) respectif à chaque première image (G1, G2, ..., Gn), où ledit premier signal de notification (NS1) est généré pour chaque première image (G1, G2, ..., Gn), ledit procédé comprenant le stockage, pour chaque première image (G1, G2, ..., Gn), du premier code d'identification (ID1) associé à ladite première image et d'une première donnée (D1) représentant le premier signal de notification (NS1) respectif.

9. Procédé selon l'une quelconque des revendications précédentes, dans lequel ledit produit semi-fini (1) a une forme plate, qui est délimitée par une surface supérieure (1a), une surface inférieure (1b) et au moins deux surfaces latérales (1c, 1d), où lesdits premiers rayonnements électromagnétiques (R1) sont sensiblement émis à partir de ladite surface supérieure (1a), où des deuxièmes rayonnements électromagnétiques (R2), représentant une émission de chaleur à partir dudit produit semi-fini (1) pendant que ledit produit semi-fini (1) libère ladite chaleur accumulée, sont sensiblement émis à partir de ladite surface inférieure (1b), où une deuxième vérification est effectuée pour vérifier :
la présence dudit deuxième composant (12) ; et/ou
l'agencement dudit deuxième composant (12) par rapport audit premier composant (11),
dans lequel ladite deuxième vérification comprend :
la détection desdits deuxièmes rayonnements électromagnétiques (R2) ;
sur la base desdits deuxièmes rayonnements (R2) détectés, la détermination de deuxièmes paramètres de détection (DP2) représentant la présence dudit deuxième composant (12) et/ou l'agencement dudit deuxième composant (12) par rapport audit premier composant (11).

10. Procédé selon l'une quelconque des revendications précédentes, dans lequel ledit produit semi-fini (1), lorsqu'il est découpé sur mesure, forme une pluralité de bandes de roulement.

11. Procédé selon la revendication 10, dans lequel ledit deuxième composant (12) est un insert conducteur associé à une bande de roulement.

12. Appareil adapté pour commander l'extrusion d'un produit semi-fini dans un processus de construction de pneu, dans lequel un produit semi-fini (1) à la sortie d'un ensemble d'extrusion (2) comprend au moins :
➢ un premier composant (11) fait d'au moins un premier matériau ;
➢ un deuxième composant (12) fait d'au moins un deuxième matériau, différent dudit premier matériau ;
ledit produit semi-fini (1) ayant accumulé de la chaleur au cours d'une extrusion effectuée dans ledit ensemble d'extrusion (2) ;
ledit appareil (100) étant adapté pour effectuer une première vérification pour vérifier :
la présence dudit deuxième composant (12) ; et/ou l'agencement dudit deuxième composant (12) par rapport audit premier composant (11),
ledit appareil (100) comprenant :
➢ au moins un premier dispositif de détection (110) adapté pour détecter des premiers rayonnements électromagnétiques (R1) représentant une émission de chaleur à partir dudit semi-produit (1) pendant que ledit semi-produit (1) libère ladite chaleur accumulée ;
➢ une unité de traitement (120) associée audit au moins un premier dispositif de détection (110) et configurée :
pour déterminer, sur la base desdits premiers rayonnements (R1) détectés, des premiers paramètres de détection (DP1) représentant la présence dudit deuxième composant (12) et/ou l'agencement dudit deuxième composant (12) par rapport audit premier composant (11).

13. Appareil selon la revendication 12, dans lequel ladite unité de traitement (120) est configurée pour générer un premier signal de notification (NS1) en fonction desdits premiers paramètres de détection (DP1).

14. Appareil selon la revendication 12, dans lequel lesdits premiers rayonnements électromagnétiques (R1) détectés génèrent des premières images (G1, G2, ..., Gn), chacune desdites premières images (G1, G2, ..., Gn) étant générée par des rayonnements qui sont détectés sensiblement dans le même intervalle de temps.

15. Appareil selon l'une quelconque des revendications 12 à 14, dans lequel ledit produit semi-fini (1) a une forme plate, qui est délimitée par une surface supérieure (1a), une surface inférieure (1b) et au moins deux surfaces latérales (1c, 1d), où ledit premier dispositif de détection (110) est configuré pour détecter les premiers rayonnements électromagnétiques (R1) émis à partir de ladite surface supérieure (1a), ledit premier dispositif de détection (110) faisant sensiblement face à ladite surface supérieure (1a), où un deuxième dispositif de détection (140) est inclus, qui est configuré pour détecter des deuxièmes rayonnements électromagnétiques (R2) représentant une émission de chaleur à partir dudit produit semi-fini (1) pendant que ledit produit semi-fini (1) libère ladite chaleur accumulée, émis à partir de ladite surface inférieure (1b), ledit deuxième dispositif de détection (140) faisant sensiblement face à ladite surface inférieure (1b), où ledit appareil (1) est configuré pour effectuer une deuxième vérification pour vérifier :
la présence dudit deuxième composant (12) ; et/ou
l'agencement dudit deuxième composant (12) par rapport audit premier composant (11),
dans lequel ladite unité de traitement (120) est associée audit deuxième élément de détection (140) et est configurée :
pour déterminer, sur la base desdits deuxièmes rayonnements (R2) détectés, des deuxièmes paramètres de détection (DP2) représentant la présence dudit deuxième composant (12) et/ou l'agencement dudit deuxième composant (12) par rapport audit premier composant (11).
